# EUROPEAN PATENT APPLICATION

(11) **EP 4 759 646 A1**
(43) Date of publication of application: **17.06.2026**
(21) Application number: 25213018.2
(22) Date of filing: 03.11.2025
(51) Int. Cl.: B60S 1/38, B60S 1/40

(54) **UNIVERSAL WINDSHIELD WIPER MOUNT ASSEMBLY STRUCTURE**

(30) Priority: 11.12.2024 CN 202423068731 U
(71) Applicant: Danyang UPC Auto Parts Co., Ltd., Danyang, Zhenjiang, Jiangsu 212300 (CN)
(72) Inventor: CHANG, Che-Wei, 22069 New Taipei City (TW); YANG, Cheng-Kai, 22069 New Taipei City (TW); CHANG, Chuan-Chih, 22069 New Taipei City (TW)
(74) Representative: 2K Patent Partnerschaft mbB

(57) **Abstract**

A universal windshield wiper mount assembly (1) includes a mount (10), an adapter (20) and a scraper (30). The mount (10) has a combining space (100) and a first pivoting part (11). The adapter (20) has a second pivoting part (21) and is sheathed on the mount (10) to align the second pivoting part (21) with the first pivoting part (11) to combine the drive arm (2). The scraper (30) is combined with the bottom side of the mount (10). The components constitute the universal windshield wiper mount assembly (1).

## Description

### BACKGROUND OF THE DISCLOSURE

### Technical Field

The present disclosure relates to windshield wipers, and particularly relates to a windshield wiper mount assembly structure.

### Description of Related Art

In general, an automotive wiper is mounted on the outer surface of an automotive windshield and connected to a wiper drive arm of the automotive to enable the wiper to oscillate repeatedly across the windshield surface, thereby removing rainwater, dirt, and other foreign substances from the windshield.

Furthermore, some related-art vehicles feature a metallic mount with a plastic drive arm directly secured to the metallic mount. This allows the wiper drive arm to drive a mounting bracket and a scraper attached to the bottom side of the mounting bracket to clean an automotive windshield. However, after prolonged use of the wiper structure, the drive arm becomes damaged easily due to the friction against the metal mount, and it is necessary to replace the wiper drive arm frequently, thereby causing inconvenience in use and requiring improvements.

In view of the aforementioned drawbacks of the related art, the discloser of the present disclosure has made it a goal to conduct research and apply theories to overcome the drawbacks of the related art.

### SUMMARY OF THE DISCLOSURE

The primary objective of the present disclosure is to provide a windshield wiper mount assembly structure to enhance the wiper assembly structure and improve the convenience of use.

To achieve the aforementioned objective, the present disclosure discloses a universal windshield wiper mount assembly for combining a drive arm, and the universal windshield wiper mount assembly includes a mount, adapter and scraper. The mount has a combining space and a first pivoting part communicating with the combining space. The adapter has a second pivoting part, and the adapter is sheathed on the mount for aligning the second pivoting part with the first pivoting part to combine the drive arm. The scraper is attached to the bottom side of the mount.

In an embodiment of the present disclosure, the universal windshield wiper mount assembly further includes a scraper seat combined with the bottom side of the mount and passed by the scraper.

In an embodiment of the present disclosure, the mount includes a bottom plate and two side plates connected to the bottom plate, each side plate has a first pivoting part and a plurality of snap slots, two sides of the scraper seat are provided with a plurality of protruding hooks, and the scraper seat is snapped into the snap slot through the protruding hook to combine the mount.

In an embodiment of the present disclosure, the scraper seat is formed with a passing groove, the scraper includes a head and a scraping part connected to the head, and the head passes into the passing groove.

In an embodiment of the present disclosure, the universal windshield wiper mount assembly further includes a pair of decorative plates combined with two sides of the mount respectively, and two sides of the adapter press against the pair of decorative plates respectively.

In an embodiment of the present disclosure, the universal windshield wiper mount assembly further includes a metal bracket passing into the pair of decorative plates.

In an embodiment of the present disclosure, the mount is formed with a claw hook located on the bottom side of each snap slot, and the metal bracket passes to the pair of decorative plates through the claw hook.

In an embodiment of the present disclosure, the first pivoting part is a through hole, and the second pivoting part is a pivot hole or a pivot shaft.

In an embodiment of the present disclosure, the universal windshield wiper mount assembly further includes a drive arm seat provided for combining a drive arm, and the drive arm seat is pivotally connected to the second pivoting part.

In an embodiment of the present disclosure, the drive arm seat includes a head hooked to the drive arm, and a tail pivotally connected to the second pivoting part.

Compared with the related-art, the universal windshield wiper mount assembly of the present disclosure includes a mount, an adapter and a scraper, and the adapter is attached to the mount, and the scraper is attached to the bottom side of the mount through the scraper. The drive arm is then attached to the adapter to drive the scraper to clean the automotive windshield. Furthermore, the universal windshield wiper mount assembly of the present disclosure also includes a drive arm seat pivotally connected to the adapter, allowing the adapter and drive arm to be pivotally connected through the drive arm seat. This arrangement allows the universal windshield wiper mount assembly to be installed on different models of drive arms, thus improving practicality and convenience.

### BRIEF DESCRIPTION OF THE DRAWINGS

FIG. 1 is a schematic view showing a use of a universal windshield wiper mount assembly of the present disclosure;
FIG. 2 is an exploded view of the universal windshield wiper mount assembly in accordance with the present disclosure;
FIG. 3 is a schematic view showing the assembly of a mount and a scraper seat in accordance with the present disclosure;
FIGS. 4 and 5 are two cross-sectional views of the universal windshield wiper mount assembly in accordance with the present disclosure; and
FIG. 6 is a schematic view showing another use of the universal windshield wiper mount assembly in accordance with the present disclosure.

### DETAILED DESCRIPTION

The detailed description and technical content of the present disclosure are illustrated below with reference to the accompanying drawings. However, the accompanying drawings are intended for the illustrative purposes only, but not intended to limit the scope of the present disclosure.

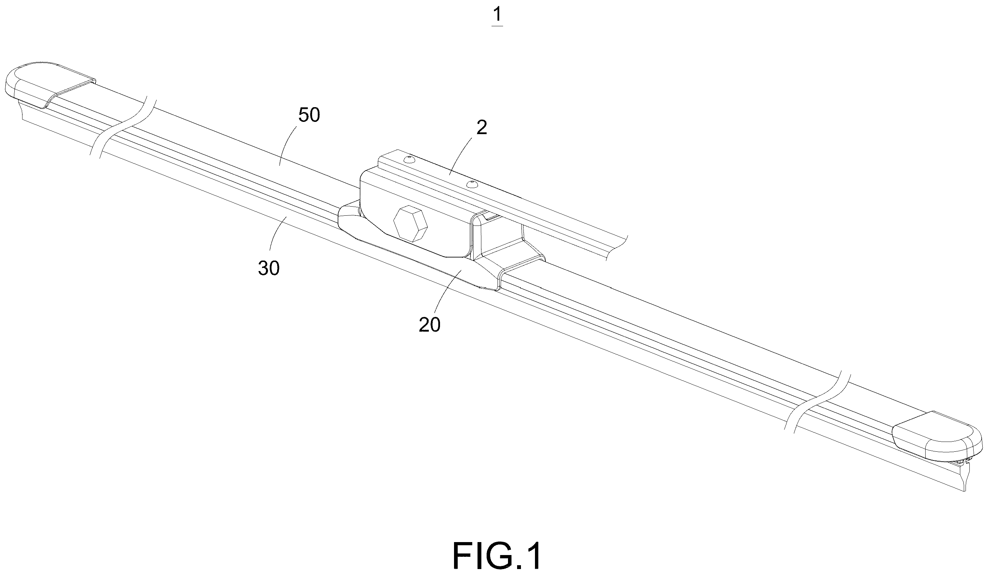

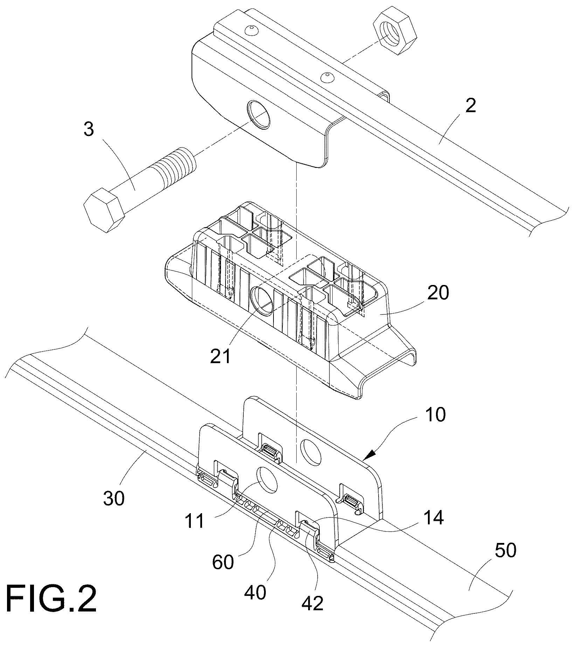

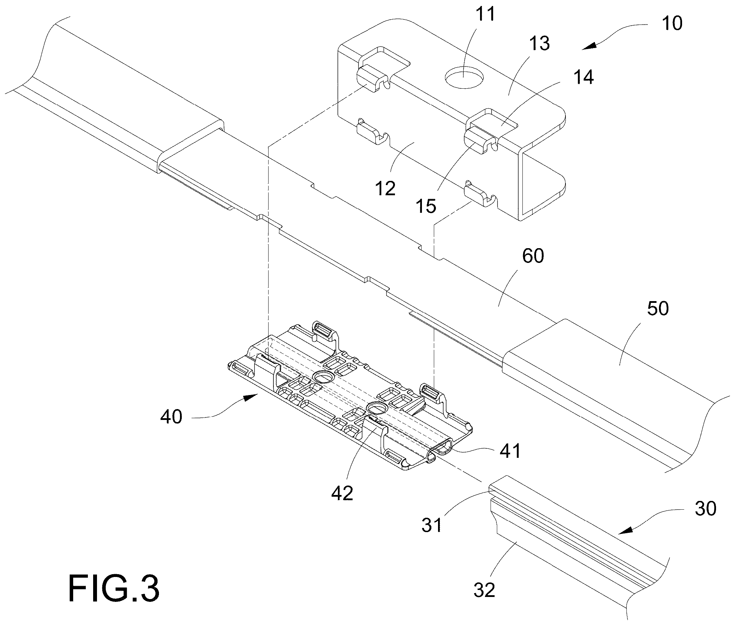

With reference to FIGS. 1 to 3 for the schematic view showing the use of a universal windshield wiper mount assembly, the exploded view of the universal windshield wiper mount assembly, and the schematic view showing the assembly of a mount and a scraper in accordance with the present disclosure respectively, the universal windshield wiper mount assembly 1 is provided for combining a drive arm. The universal windshield wiper mount assembly 1 includes a mount 10, an adapter 20 and a scraper 30. The adapter 20 is combined with the mount 10. The scraper 30 is combined with the bottom side of the mount 10. This allows the drive arm 2 to be combined with the adapter 20 to drive the scraper 30 to clean an automotive windshield. In actual implementation, the adapter 20 is replaceable with different models of the drive arm 2 to fit the installation for different car models. The universal windshield wiper mount assembly 1 will be described in more detail below.

The mount 10 has a combining space 100 and a first pivoting part 11 communicating with the combining space 100. The adapter 20 has a second pivoting part 21. The adapter 20 is sheathed on the mount 10 to align the second pivoting part 21 with the first pivoting part 11, so as to combine the drive arm 2 through a locking member 3. The scraper 30 is combined with the bottom side of the mount 10 to constitute the universal windshield wiper mount assembly 1.

In this embodiment, the universal windshield wiper mount assembly 1 further includes a scraper seat 40. The scraper seat 40 is combined with the bottom side of the mount 10 and passed by the scraper 30. In this embodiment, the scraper seat 40 is formed with a passing groove 41. In addition, the scraper 30 includes a head 31 and a scraping part 32 connected to the head. The head 31 passes into the passing groove 41 to combine the bottom side of the mount 10 through the scraper seat 40.

In an exemplary embodiment, the mount 10 includes a bottom plate 12 and two side plates 13 connected to the bottom plate 12. Each side plate 13 has the first pivoting part 11 and a plurality of snap slots 14. In addition, two sides of the scraper seat 40 are provided with a plurality of protruding hooks 42 respectively. The scraper seat 40 is snapped into the snap slots 14 through the protruding hooks 42 to combine the mount 10.

It is noteworthy that in some embodiments, the first pivoting part 11 is a through hole, and the second pivoting part 21 is a pivot hole or a pivot shaft. In this embodiment, the second pivoting part 21 is a pivot hole.

In addition, the universal windshield wiper mount assembly 1 further includes a pair of decorative plates 50 and a metal bracket 60. The pair of decorative plates 50 are combined with two sides of the mount 10 respectively, and two sides of the adapter 20 press against the pair of decorative plates 50 respectively. The mount 10 is formed with a claw hook 15 located on the bottom side of each snap slot 14. The metal bracket 60 passes into the pair of decorative plates 50 through the claw hooks 15 for enhancing the strength of the pair of decorative plates 50.

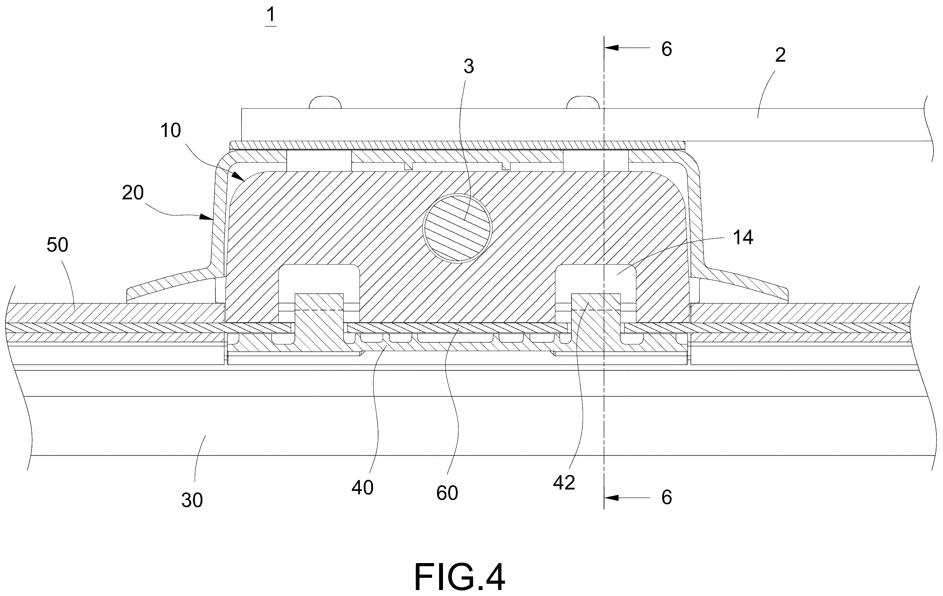

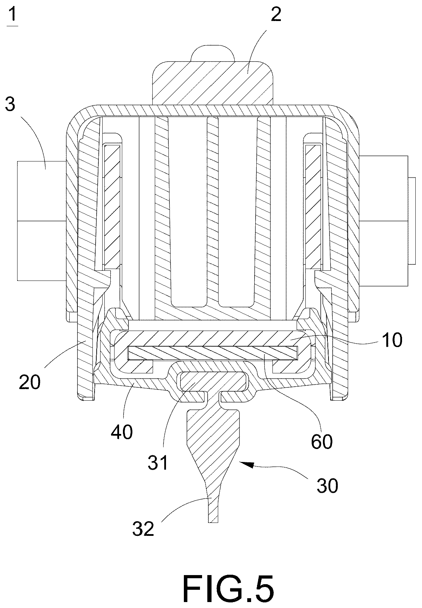

With reference to FIGS. 4 and 5 for the two cross-sectional views of the universal windshield wiper mount assembly in accordance with the present disclosure, the scraper seat 40 of the present disclosure is snapped into the snap slot 14 of the mount 10 through the protruding hook 42 to combine with the bottom side of the mount 10. The adapter 20 is sheathed on the mount 10, and two sides of the adapter 20 press against the pair of decorative plates 50 respectively. The drive arm 2 is combined with the adapter 20 through the locking member 3. In addition, the metal bracket 60 is passed with the claw hook 15 of the mount 10. The head 31 of the scraper 30 passes into the passing groove 41 of the scraper seat 40 to combine the scraper 30 with the bottom side of the scraper seat 40, so as to constitute the universal windshield wiper mount assembly structure 1 of the present disclosure.

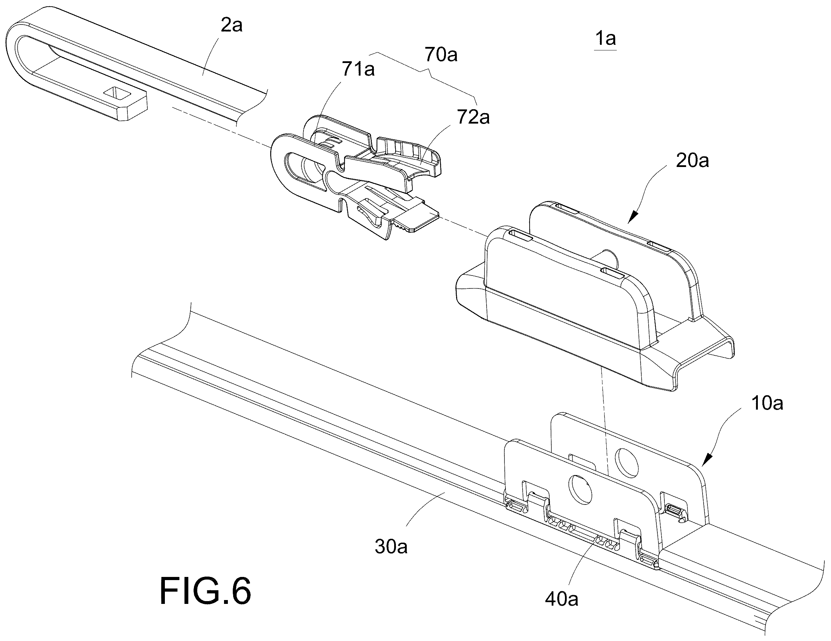

With reference to FIG. 6 for another use of the universal windshield wiper mount assembly in accordance with an embodiment of the present disclosure, the universal windshield wiper mount assembly 1a includes a mount 10a, an adapter 20a, a scraper 30a and a scraper seat 40a. The adapter 20a is sheathed on the mount 10a. The scraper 30a is combined with the bottom side of the mount 10a through the scraper seat 40. The difference of this embodiment lies on that the universal windshield wiper mount assembly 1a further includes a drive arm seat 70a. The drive arm seat 70a is pivotally connected to the second pivoting part 21a of the adapter 20a, and the second pivoting part 21a is a pivot shaft. In addition, the drive arm seat 70a includes a head 71a hooked to the drive arm 2a and a tail 72a pivotally connected to the second pivoting part 21a. This allows the universal windshield wiper mount assembly 1a to be combined with different models of the drive arms 2a.

As will become apparent to the skilled person when studying the above disclosure in conjunction with the appended claims, the appended claims may also be understood as multiple dependent although these have been drafted as single dependent claims. Hence, e.g., the expression 'The universal windshield wiper mount assembly as claimed in claim 1' is to be understood also in the sense of 'The universal windshield wiper mount assembly as claimed in any of the preceding claims' or with reference to any combination of antecedent claims as far as disclosed in the above disclosure.

## Claims

1. A universal windshield wiper mount assembly (1), for combining with a drive arm (2), the universal windshield wiper mount assembly (1) comprising:
a mount (10), comprising a combining space (100) and a first pivoting part (11) communicating with the combining space (100);
an adapter (20), comprising a second pivoting part (21), and sheathed on the mount (10), for aligning the second pivoting part (21) with the first pivoting part (11) to combine the drive arm (2); and
a scraper (30), combined with the bottom side of the mount (10).

2. The universal windshield wiper mount assembly (1) according to claim 1, further comprising a scraper seat (40) combined with the bottom side of the mount (10), and passed by the scraper (30).

3. The universal windshield wiper mount assembly (1) according to claim 2, wherein the mount (10) comprises a bottom plate (12) and two side plates (13) coupled to the bottom plate (12), each side plate (13) comprises the first pivoting part (11) and a plurality of snap slots (14), two sides of the scraper seat (40) are provided with a plurality of protruding hooks (42), and the scraper seat (40) is snapped into the snap slots (14) through the protruding hooks (42) to combine the mount (10).

4. The universal windshield wiper mount assembly (1) according to claim 2, wherein the scraper seat (40) is formed with a passing groove (41), the scraper (30) comprises a head (31) and a scraping part (32) coupled to the head (31), and the head (31) passes into the passing groove (41).

5. The universal windshield wiper mount assembly (1) according to claim 3, further comprising a pair of decorative plates (50) combined with two sides of the mount (10) respectively, and two sides of the adapter (20) press against the pair of decorative plates (50) respectively.

6. The universal windshield wiper mount assembly (1) according to claim 5, further comprising a metal bracket (60) passing into the pair of decorative plates (50).

7. The universal windshield wiper mount assembly (1) according to claim 6, wherein the mount (10) is formed with a claw hook (15) located at the bottom side of each snap slot (14), and the metal bracket (60) passes through the claw hooks (15) to the pair of decorative plates (50).

8. The universal windshield wiper mount assembly (1) according to claim 1, wherein the first pivoting part (11) is a through hole, and the second pivoting part (21) is a pivot hole or a pivot shaft.

9. The universal windshield wiper mount assembly (1a) according to claim 1, further comprising a drive arm seat (70a) provided for combining the drive arm (2a), and the drive arm seat (70a) being pivotally coupled to the second pivoting part (21).

10. The universal windshield wiper mount assembly (1) according to claim 9, wherein the drive arm seat (70a) comprises a head (71a) hooked to the drive arm (2) and a tail (72a) pivotally coupled to the second pivoting part (21a).
